Europäisches Patentamt

**European Patent Office**

Office européen des brevets

(19)

(11) Veröffentlichungsnummer: **0 203 479**
**B1**

(12) **EUROPÄISCHE PATENTSCHRIFT**

(45) Veröffentlichungstag der Patentschrift:
26.07.89

(21) Anmeldenummer: 86106684.3

(22) Anmeldetag: 16.05.86

(51) Int. Cl.⁴: **B29C 55/28, B29C 47/20,**
**B29C 47/92, B29D 23/00**
**// B29L23:00**

(54) Verfahren zur Herstellung einer Kunststoffolie mit geringer Dickentoleranz.

(30) Priorität: 21.05.85 DE 3518155

(43) Veröffentlichungstag der Anmeldung:
03.12.86 Patentblatt 86/49

(45) Bekanntmachung des Hinweises auf die Patenterteilung:
26.07.89 Patentblatt 89/30

(84) Benannte Vertragsstaaten:
BE CH FR GB IT LI LU NL SE

(56) Entgegenhaltungen:
DD-A- 2 000 78
DE-B- 2 631 838

(73) Patentinhaber: **Reifenhäuser GmbH & Co.,**
**Maschinenfabrik, Spicher Strasse,**
**D-5210 Troisdorf 15(DE)**

(72) Erfinder: **Halter, Hartmut, Rubensstrasse 129,**
**D-5210 Troisdorf-Eschmar(DE)**

(74) Vertreter: **Andrejewski, Walter et al, Patentanwälte**
**Dipl.-Phys. Dr. Walter Andrejewski Dipl.-Ing. Dr.-Ing.**
**Manfred Honke Dipl.-Phys. Dr. Karl Gerhard Masch**
**Theaterplatz 3, Postfach 10 02 54, D-4300 Essen 1(DE)**

# Beschreibung

Die Erfindung bezieht sich gattungsgemäß auf ein Verfahren zur Herstellung einer Kunststoffolie mit geringer Dickentoleranz mit Hilfe einer Blasfolien-Extruderanlage, welche Blasfolien-Extruderanlage einen Blaskopf mit Ringdüse aufweist, die in eine Mehrzahl von temperatursteuerbaren Temperiersektoren aufgeteilt ist, wobei aus der Ringdüse schlauchförmig ein Massestrom des thermoplastischen Kunststoffes austritt, der aufgeblasen wird und über einen Aufbereitungsbereich in den dünnwandigen Folienschlauch überführt wird, wobei fernerhin längs des Umfanges der herzustellenden Kunststoffolie ein Zustandsparameter gemessen, aus den Meßwerten ein den einzelnen Temperiersektoren zugeordneter Mittelwert gebildet, ein Sollwert festgelegt und nach der Maßgabe der Abweichung der Istwerte dieser Mittelwerte von dem Sollwert die Temperatur dieses Temperiersektors über die Regeleinrichtung korrigierend verändert wird. Bei einem derartigen Verfahren kann der Mengendurchsatz durch die Temperatur des jeweiligen Temperiersektors geändert werden. - Es versteht sich, daß die Blasfolienanlage einen rotierenden, einen oszillierend rotierenden oder einen feststehenden Blaskopf aufweisen kann. Die Temperiersektoren besitzen zweckmäßigerweise alle die gleiche Umfangslänge. Sie sind mit Heiz- und/oder Kühleinrichtungen ausgerüstet (DE-OS 21 40 194). Im Rahmen der Erfindung liegt es, den Blaskopf zusätzlich mit einem autogenen Wärmetauscher zu versehen (DE-OS 32 11 833), der z. B. aus einem die Blaskopfachse umgebenden Ringspalt besteht, der im wesentlichen parallel zum Massestrom des thermoplastifizierten Kunststoffes erstreckt ist, wobei der Ringspalt lediglich teilweise mit einem bei Arbeitstemperatur des Blaskopfes verdampfbaren oder wieder kondensierbaren Wärmeaustauschmedium gefüllt sowie im übrigen druckdicht verschlossen ist. Es versteht sich fernerhin, daß bei dem gattungsgemäßen Verfahren die Regelung grundsätzlich umso genauer ist, je größer die Anzahl der Temperiersektoren ist. Regelmäßig wird mit vier bis acht Temperiersektoren gearbeitet. Bei dem bekannten gattungsgemäßen Verfahren (DE-OS 30 02 903) wird als Zustandsparameter die Dicke des Folienschlauches mit einer geeigneten Meßeinrichtung gemessen, die in Abzugrichtung des Folienschlauches hinter der üblichen Kalibriereinrichtung und damit weit entfernt von der Ringdüse und weit entfernt sogar vom Aufweitungsbereich angeordnet ist. Daraus resultiert eine erhebliche Totzeit mit den bekannten regeltechnischen Nachteilen. Im übrigen muß mit erheblichem meß- und regeltechnischen Aufwand gearbeitet werden: Den Temperiersektoren werden Foliensektoren theoretisch zugeordnet. Der Foliensektor mit Dickenmaximum oder Dickenminimum wird zur Bestimmung des diesem zugeordneten Temperiersektors an der Ringdüse als lagerichtig extrudiert angenommen. Die folgenden, umfangslängengleichen Foliensektoren werden der Reihe nach den diesen folgenden Temperiersektoren zugeordnet. Die Größe der aus den Messungen der Mittelwerte über die einzelnen Foliensektoren abgeleiteten Korrekturbefehle für die Stellglieder der Temperiersektoren wird auf den Foliensektor mit dem Dickenmaximum oder Dickenminimum bezogen. Der diesem zugeordnete Temperiersektor erhält keinen Korrekturbefehl. Die Korrekturbefehle der anderen Temperiersektoren werden durch die jeweilige Abweichung der mittleren Dickenverteilung der diesen zugeordneten Foliensektoren von dem Bezugsextremwert der mittleren Dickenverteilung gebildet. Aufgrund der Korrekturbefehle entsprechend der Abweichung erfolgt eine Abkühlung der Temperiersektoren, wenn der Bezugsextremwert ein Dickenminimum ist, oder eine Erwärmung der Kühlsektoren, wenn der Bezugsextremwert ein Dickenmaximum ist. Nach einigen Meß- oder Regelzyklen werden die aus nachfolgenden Messungen ermittelten Differenzen der mittleren Dickenverteilung der einzelnen Foliensektoren zur mittleren Foliendicke von den zuvor ermittelten Abweichungen abgezogen oder zu diesen hinzuaddiert, wobei die so gebildeten Werte ein neues Maß für den Korrekturbefehl bilden. Aus der Anweisung, daß der Foliensektor mit dem Dickenmaximum oder dem Dickenminimum zur Bestimmung des diesem zugeordneten Temperatursektors am Düsenring als lagerichtig extrudiert anzunehmen ist, soll eine regeltechnische Iteration dahingehend sich ergeben, daß eine fortschreitende Beseitigung der Dünnstellen und Dickstellen erfolgt und sich die Foliensektoren zunehmend lagerichtig zu den zugehörigen Temperatursektoren gleichsam hinziehen. Die Praxis zeigt, daß zumindest bei größeren Dickenabweichungen der angestrebte regeltechnische Effekt des Ausgleichs von Dickenfehlern und der Einhaltung von vorgegebenen Dickentoleranzen betriebssicher nicht eintritt. Bei größeren Dickenabweichungen müssen als Korrekturmaßnahmen an der Ringdüse größere Temperaturveränderungen durchgeführt werden, die sich auf den Massedurchsatz auswirken und damit, insbes. wegen der ohnehin erheblichen Totzeit, zum Fehlverhalten dieser Regelmaßnahmen führen. Die oben zitierte Annahme verliert dabei ihren regeltechnischen Wahrheitswert, der ohnehin gering ist. Vor allem stört, daß zur Durchführung der Dickenmessung die Rotationsbewegung bzw. die oszillierende Rotationsbewegung des Düsenringes bzw. einer nachgeschalteten Flachlegeeinrichtung angehalten werden muß.

Der Erfindung liegt die Aufgabe zugrunde, das gattungsgemäße Verfahren so zu führen, daß betriebssicher ein Ausgleich von Dickenfehlern erfolgt und vorgegebene Dickentoleranzen sicher eingehalten werden können, und zwar selbst dann, wenn große Dickenabweichungen auszuregeln sind.

Zur Lösung dieser Aufgabe lehrt die Erfindung, daß als Zustandsparameter die Temperatur des Massestromes gemessen wird sowie daraus die Temperaturmittelwerte für die einzelnen Temperiersektoren gebildet werden und daß zumindest einer dieser Temperaturmittelwerte oder ein daraus gebildeter Gesamtmittelwert als Sollwert der Regeleinrichtung zugeführt wird. Mit anderen Worten wird längs des Umfanges der herzustellenden Kunststoffolie entsprechend den einzelnen Temperiersektoren die Temperatur des Massestromes als Zustandsparameter gemessen. - Im Rahmen der Erfindung kann mit den verschiedensten Mittelwerten im mathematisch-statischen Sinne gearbeitet werden. Im allgemeinen wird man die Temperaturmittelwerte als arithmetrische Mittelwerte bilden. Grundsätzlich könnte aber auch mit dem geometrischen Mittel, einem harmonischen Mittel, dem quadratischen Mittel sowie mit gewogenen Mittelwerten gearbeitet werden. Durch die Gewichte könnten systematische Fehler, die der Blasfolien-Extruderanlage eingeprägt sind, berücksichtigt werden. Die Mittelwertbildung kann jedenfalls mit den Hilfsmitteln der modernen Mikroprozessortechnik ohne weiteres durchgeführt werden. Die Temperaturmeßeinrichtung kann dazu bei Blasfolien-Extruderanlagen mit rotierendem oder oszillierend rotierendem Blaskopf stationär, bei Blasfolien-Extruderanlagen mit feststehendem Blaskopf rotierend oder oszillierend rotierend angeordnet werden, jedenfalls so, daß zumindest ein geeigneter Temperatursensor in einer vorgegebenen Zeit den Bereich des Massestromes erfaßt, der einem Temperiersektor zugeordnet ist. Die Erfindung arbeitet folglich mit einem zeitlich und damit für die gesamte Blasfolien-Extruderanlage zeitlich ausreichend konstanten Mittelwert. Im einfachsten Falle ist ein einziger Temperatursensor vorgesehen. Man kann aber auch mit mehreren Temperatursensoren arbeiten, beispielsweise jedem Temperatursektor einen Temperatursensor zuordnen. Endlich liegt es im Rahmen der Erfindung, mit einer Mehrzahl von mehr oder weniger dicht an dicht angeordneten, über den Umfang des Massestromes verteilten Temperatursensoren zu arbeiten, die in bestimmter Folge abgetastet werden.

Überraschenderweise kommt man erfindungsgemäß zu einer sehr genauen Dickenregelung und damit zu Kunststoffolien mit geringer Dickentoleranz über Länge und Breite. Die Totzeit ist im Vergleich zu den eingangs beschriebenen bekannten Maßnahmen klein und läßt sich mit zunehmender Anzahl der eingesetzten Temperiersensoren beliebig klein einstellen. Regeltechnische Annahmen, deren regeltechnischer Wahrheitswert der Kritik offen ist oder verlorengehen kann (wie die eingangs zitierte Annahme, wonach der Foliensektor mit Dickenmaximum oder Dickenminimum zur Bestimmung des diesem zugeordneten Temperiersektors am Düsenring als lagerichtig extrudiert angenommen wird) sind nicht erforderlich.

Im einzelnen bestehen im Rahmen der Erfindung mehrere Möglichkeiten für die praktische Verwirklichung. In der Ausführungsform für eine Blasfolien-Extruderanlage, bei der die Temperiersektoren mit Heiz- und Kühleinrichtungen ausgerüstet sind, wird nach bevorzugter Ausführungsform der Erfindung der Gesamtmittelwert als Sollwert für alle Temperiersektoren der Regeleinrichtung zugeführt. In der Ausführungsform für eine Blasfolienanlage, bei der die Temperiersektoren lediglich mit Heizeinrichtungen ausgerüstet sind, lehrt die Erfindung, daß der Temperaturmittelwert mit der höchsten Temperatur ermittelt und als Sollwert für alle Temperiersektoren der Regeleinrichtung zugeführt wird. In der Ausführungsform, bei der die Temperiersektoren lediglich mit Kühleinrichtungen ausgerüstet sind, lehrt die Erfindung, daß der Temperaturwert mit der niedrigsten Temperatur ermittelt und als Sollwert der Regeleinrichtung zugeführt wird. Zu besonders sicheren Betriebsergebnissen kommt man, wenn die Temperatur des Massestromes vor dem Aufweitungsbereich gemessen wird. Man kann aber auch die Temperatur des Massestromes im Aufweitungsbereich selbst messen oder auch beide Maßnahmen kombinieren.

Temperatur des Massestromes meint vorzugsweise die integrale Wandtemperatur des Massestromes. Darunter wird verstanden, daß an der Meßstelle über die Dicke des Massestromes jedes Volumenelement zur Temperaturmessung beiträgt. Das ist ohne weiteres gegeben, wenn die Temperaturstrahlung gemessen wird. Wird die integrale Wandtemperatur des Massestromes gemessen, so läßt sich die Dicke der Kunststoffolie mit extrem engen Toleranzen einstellen. Man kann aber auch die Oberflächentemperatur des Massestromes messen und kommt auch dann zu guten Ergebnissen. Für die Temperaturmessung werden zweckmäßigerweise Infrarotsensoren verwendet.

Arbeitet man nach der Lehre der Erfindung, so liegt im eingeregelten Zustand ein Massestrom vor, der überall die gleiche "mittlere Temperatur" und damit auch den gleichen spezifischen Wärmeinhalt hat. Dieser Massestrom wird nun mit einem rotationssymmetrisch völlig gleichförmigen Kühlluftstrom aufgeweitet und zur Folienblase aufgeblasen, selbstverständlich bei entsprechend homogenem Innenluftdruck und ggf. Luftaustausch in der Folienblase. Das hat zur Folge, daß eine Kunststoffolie mit sehr geringen Dickentoleranzen entsteht. Die erreichte Dickenregelung ist so genau, daß auf ein Dickenmeßgerät zur Toleranzerfassung verzichtet werden kann,

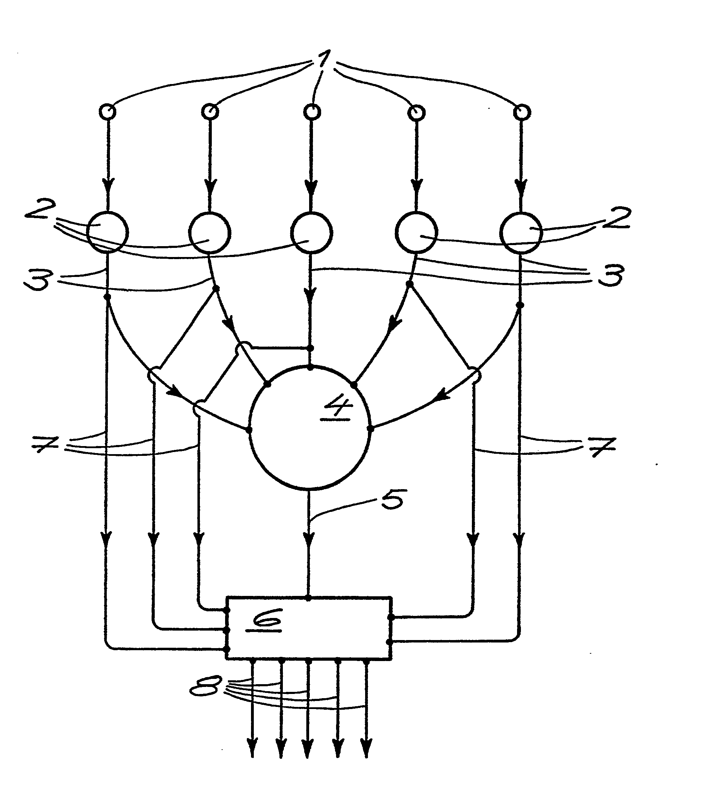

Im folgenden wird das erfindungsgemäße Verfahren anhand einer Zeichnung erläutert. Die einzige Figur zeigt ein Schema des Verfahrens.

In der Figur erkennt man zunächst die Temperatursensoren 1, die mit äquidistantem Abstand über den Umfang des Massestromes im Bereich der Ringdüse angeordnet sein mögen. Die gemessenen Temperaturwerte werden im Schema jeweils einem elektronischen Mittelwertbildner 2 zugeführt. Die so gebildeten Mittelwerte gelangen über die Leitungen 3 zu einem Sollwertbildner 4, der den Gesamtmittelwert bildet oder einen der Mittelwerte als Sollwert auswählt. Der Sollwert wird über die Sollwertzuführung 5 dem Regler 6 zugeführt. Über die Istwertzuführungen 7 wird beim Betrieb der Anlage der von den Leitungen 3 abgenommene Istwert, der den einzelnen Temperiersektoren zugeordnet ist, ebenfalls dem Regler 6 zugeführt. Nach Maßgabe des Sollwert/Istwert-Vergleiches werden entsprechende Korrekturimpulse den Stellgliedern zugeführt, mit denen die Temperatur der einzelnen Temperiersektoren steuerbar ist und zu denen die Leitungen 8 führen. - Es versteht sich, daß auch mit einem einzigen Temperatursensor 1 gearbeitet werden kann, wenn beispielsweise der Blaskopf rotiert, und daß entsprechend auch mit einem einzelnen Mittelwertbildner 2 gearbeitet werden kann. Letzteres gilt auch dann, wenn mehrere Temperatursensoren 1, wie gezeichnet angeordnet sind, und der Mittelwertbildner 2 entsprechend abgefragt wird. Im Ergebnis wird als Zustandsparameter die Temperatur des Massestromes gemessen, werden daraus die Temperaturmittelwerte für die einzelnen Temperiersektoren gebildet und wird zumindest einer dieser Temperaturmittelwerte oder ein daraus gebildeter Gesamtmittelwert als Sollwert dem Regler 6 zugeführt.

**Patentansprüche**

1. Verfahren zur Herstellung einer Kunststoffolie mit geringer Dickentoleranz mit Hilfe einer Blasfolien-Extruderanlage,
welche Blasfolien-Extruderanlage einen Blaskopf mit Ringdüse aufweist, die in eine Mehrzahl von temperatursteuerbaren Temperiersektoren aufgeteilt ist,
wobei aus der Ringdüse schlauchförmig ein Massestrom des thermoplastifizierten Kunststoffes austritt, der aufgeblasen wird und über einen Aufweitungsbereich in den dünnwandigen Folienschlauch überführt wird, wobei fernerhin längs des Umfanges der herzustellenden Kunststoffolie ein Zustandsparameter gemessen, aus den Meßwerten ein den einzelnen Temperiersektoren zugeordneter Mittelwert gebildet, ein Sollwert festgelegt und nach der Maßgabe der Abweichung der Istwerte dieser Mittelwerte von dem Sollwert die Temperatur dieses Temperiersektors über die Regeleinrichtung korrigierend verändert wird, **dadurch gekennzeichnet,** daß als Zustandsparameter die Temperatur des Massestromes gemessen wird sowie daraus die Temperaturmittelwerte für die einzelnen Temperiersektoren gebildet werden und daß zumindest einer dieser Temperaturmittelwerte oder ein daraus gebildeter Gesamtmittelwert als Sollwert der Regeleinrichtung zugeführt wird.

2. Verfahren nach Anspruch 1, dadurch gekennzeichnet, daß die Temperaturmittelwerte als arithmetische Mittelwerte gebildet werden.

3. Verfahren nach einem der Ansprüche 1 oder 2 in der Ausführungsform für eine Blasfolien-Extruderanlage, bei der die Temperiersektoren mit Heiz- und Kühleinrichtungen ausgerüstet sind, dadurch gekennzeichnet, daß der Gesamtmittelwert als Sollwert für alle Temperiersektoren der Regeleinrichtung zugeführt wird.

4. Verfahren nach einem der Ansprüche 1 oder 2 in der Ausführungsform für eine Blasfolien-Extruderanlage, bei der die Temperiersektoren lediglich mit Heizeinrichtungen ausgerüstet sind, dadurch gekennzeichnet, daß der Temperaturmittelwert mit der höchsten Temperatur ermittelt und als Sollwert für alle Temperiersektoren der Regeleinrichtung zugeführt wird.

5. Verfahren nach einem der Ansprüche 1 oder 2 in der Ausführungsform für eine Blasfolien-Extruderanlage, bei der die Temperiersektoren lediglich mit Kühleinrichtungen ausgerüstet sind, dadaurch gekennzeichnet, daß der Temperaturmittelwert mit der niedrigsten Temperatur ermittelt und als Sollwert für alle Temperiersektoren der Regeleinrichtung zugeführt wird.

6. Verfahren nach einem der Ansprüche 1 bis 5, dadurch gekennzeichnet, daß die Temperatur des Massestromes vor dem Aufweitungsbereich gemessen wird.

7. Verfahren nach einem der Ansprüche 1 bis 5, dadurch gekennzeichnet, daß die Temperatur des Massestromes im Aufweitungsbereich gemessen wird.

8. Verfahren nach einem der Ansprüche 1 bis 7, dadurch gekennzeichnet, daß die integrale Wandtemperatur des Massestromes gemessen wird.

9. Verfahren nach einem der Ansprüche 1 bis 7, dadurch gekennzeichnet, daß die Oberflächentemperatur des Massestromes gemessen wird.

10. Verfahren nach einem der Ansprüche 1 bis 9, dadurch gekennzeichnet, daß für die Temperaturmessung Infrarotsensoren verwendet werden.

**Revendications**

1. Procédé de fabrication d'une feuille de matière plastique avec une faible tolérance d'épaisseur à l'aide d'une installation d'extrusion de feuilles soufflées, ladite installation d'extrusion de feuilles soufflées comprenant une tête de soufflage avec filière annulaire divisée en une pluralité de secteurs thermorégulateurs commandables en température, la filière annulaire débitant sous forme de gaine un flux massique de matière plastique thermoplastifiée lequel est soufflé et transformé, par l'intermédiaire d'une section d'élargissement, en un tube soufflé à paroi mince, un paramètre d'état étant, en outre, mesuré le long de la périphérie de la feuille de matière plastique à produire, une moyenne associée aux différents secteurs thermorégulateurs étant formée à partir des valeurs mesurées, une valeur de consigne étant fixée et la température de ce secteur thermorégulateur étant changée dans le sens d'une correction, par l'intermédiaire d'un système régulateur, en fonction de l'écart des valeurs effectives de ces moyennes par rapport à la valeur de consigne, caractérisé par le fait que la température du flux massique est mesurée comme paramètre d'état, avec formation des valeurs moyennes de température pour les différents secteurs thermorégulateurs, et qu'au moins l'une de ces valeurs moyennes de température ou une moyenne globale déterminée à partir de celles-ci est transmise comme valeur de consigne au système de réglage.

2. Procédé selon la revendication 1, caractérisé par le fait que les valeurs moyennes de température sont formées en tant que moyennes arithmétiques.

3. Procédé selon l'une des revendications 1 ou 2, dans le mode de réalisation pour une installation d'extrusion de feuilles soufflées dans laquelle les secteurs thermorégulateurs sont équipés de dispositifs de chauffage et de refroidissement, caractérisé par le fait que la moyenne globale est transmise au système de réglage en tant que valeur de consigne pour l'ensemble des secteurs thermorégulateurs.

4. Procédé selon l'une des revendications 1 ou 2, dans le mode de réalisation pour une installation d'extrusion de feuilles soufflées dans laquelle les secteurs thermorégulateurs sont équipés uniquement de dispositifs de chauffage, caractérisé par le fait que la moyenne de température est déterminée avec la température maximale et transmise au système de réglage en tant que valeur de consigne pour tous les secteurs thermorégulateurs.

5. Procédé selon l'une des revendications 1 ou 2, dans le mode de réalisation pour une installation d'extrusion de feuilles soufflées dans laquelle les secteurs thermorégulateurs sont équipés uniquement de dispositifs de refroidissement, caractérisé par le fait que la moyenne de température est déterminée avec la température minimale et transmise au système de réglage pour tous les secteurs thermorégulateurs.

6. Procédé selon l'une quelconque des revendications 1 à 5, caractérisé par le fait que la température du flux massique est mesurée en amont de la zone d'élargissement.

7. Procédé selon l'une quelconque des revendications 1 à 5, caractérisé par le fait que la température du flux massique est mesurée dans la zone d'élargissement.

8. Procédé selon l'une quelconque des revendications 1 à 7, caractérisé par le fait que l'on mesure la température intégrale de la paroi du flux massique.

9. Procédé selon l'une quelconque des revendications 1 à 7, caractérisé par le fait que l'on mesure la température superficielle du flux massique.

10. Procédé selon l'une quelconque des revendications 1 à 9, caractérisé par le fait que des détecteurs à infrarouge sont utilisés pour la mesure de la température.

**Claims**

1. A process for the manufacture of a plastics film of small thickness tolerance by means of a film-blowing extruder installation, which film-blowing extruder installation possesses a blowing head with an annular nozzle that is subdivided into a plurality of temperature controllable tempering sectors, in which the thermoplasticized plastics material flows out of the annular nozzle in the form of a tube that is inflated and whilst passing through its expansion zone is converted into the thin-walled tube of film, in which moreover an indication of the working conditions is measured around the periphery of the plastics film being manufactured, a mean value representative of the individual tempering sectors is obtained from the measured values, a target value is determined and the temperature of this tempering sector is correctly changed by the control equipment in accordance with the deviation of this actual value from the target value, characterized in that the temperature of the flow of material is measured as an indication of the working conditions and from this the mean temperature values for the individual tempering sectors are determined, and that at least one of these mean temperature values or a grand mean value produced from them is transmitted as target value to the control equipment.

2. A process according to Claim 1, characterized in that the mean temperature values are produced as arithmetical mean values.

3. A process according to one of Claims 1 or 2 in the form of construction for a film-blowing extruder installation in which the tempering sectors are fitted with heating and cooling equipments, characterized in that the grand mean value is transmitted to the control equipment as target value for all the tempering sectors.

4. A process according to one of Claims 1 or 2 in the form of construction for a film-blowing extruder installation in which the tempering sectors are merely fitted with heating equipments, characterized in that the mean temperature value that has the highest temperature is determined and is transmitted to the control equipment as target value for all the tempering sectors.

5. A process according to one of Claims 1 or 2 in the form of construction for a film-blowing extruder in which the tempering sectors are merely fitted with cooling equipments, characterized in that the mean temperature value with the lowest temperature is determined and is transmitted to the control equipment as target value for all the tempering sectors.

6. A process according to one of Claims 1 to 5, characterized in that the temperature of the flow of material is measured before the expansion zone.

7. A process according to one of Claims 1 to 5, characterized in that the temperature of the flow of material is measured in the expansion zone.

8. A process according to one of Claims 1 to 7, characterized in that the temperature of the whole thickness of the flow of material is measured.

9. A process according to one of Claims 1 to 7, characterized in that the surface temperature of the flow of material is measured.

10. A process according to one of Claims 1 to 9, characterized in that infra-red sensors are used for the temperature measurements.